# EUROPÄISCHE PATENTANMELDUNG

(11) **EP 0 542 389 A1**
(43) Veröffentlichungstag der Anmeldung: **19.05.1993**
(21) Anmeldenummer: 92250335.4
(22) Anmeldetag: 13.11.1992
(51) Int. Cl.: B61B 10/02

(54) **Anordnung zum Einleiten einer Bewegung in einen Schlitten**

(30) Priorität: 15.11.1991 DE 4138187
(71) Anmelder: RUD-KETTENFABRIK RIEGER & DIETZ GMBH U. CO., D-73432 Aalen (DE)
(72) Erfinder: Kohler, Paul Dr, W-7920 Heidenheim (DE); Struppe, Gerhard Dipl-Ing, W-7082 Oberkochen (DE); Biehler, Wolfgang, W-7080 Aalen (DE)
(74) Vertreter: Böning, Manfred, Dr.-Ing.

(57) **Zusammenfassung**

Zur Einleitung einer Bewegung in einen längs einer Bewegungsbahn geführten Schlitten (2) ist letzterer mit einer Wippe (4) versehen, die eine Aufnahme (10) aufweist, in die ein Mitnehmer (11) eingreifen kann, um den Schlitten (2) mitzunehmen. Das Ein- und Ausfahren des Mitnehmers (11) in die Aufnahme (10) wird dabei durch eine Steuerschiene (1) gesteuert, die in den Ein- und Ausfahrpositionen Kippbewegungen der Wippe (4) zuläßt.

## Beschreibung

Die Erfindung betrifft eine Anordnung zum Einleiten einer Bewegung in einen längs einer Bewegungsbahn geführten Schlitten mit Hilfe eines an einem Zugelement angebrachten Mitnehmers, der mit einem schwenkbar am Schlitten gelagerten Bauteil zusammenwirkt.

Bekannt sind Anordnungen der vorstehenden Art im Bereich der Fördertechnik, und zwar im Zusammenhang mit Schleppkettenförderern, bei denen ein Wagen oder Schlitten über eine mehr oder weniger lange Wegstrecke von einem Mitnehmer mitgenommen wird, ohne daß jedoch eine Positionierung des Wagens oder Schlittens an vorgesehenen Stellen stattfindet.

Mit der Erfindung wird demgegenüber das Ziel verfolgt, mittels eines Zugelementes beliebig viele einzelne, parallel oder seriell ablaufende, hinsichtlich ihrer Größe genau einstellbare, insbesondere Steuerungszwecken dienende Schlittenbewegungen zu realisieren, wobei eine Änderung der Bewegungsrichtung, d.h. eine Bewegungsrichtungsumkehr problemlos möglich sein sollte. Diese Aufgabe wird erfindungsgemäß dadurch gelöst, daß das schwenkbar am Schlitten gelagerte Bauteil von einer Wippe gebildet wird, die eine Aufnahme für den Mitnehmer aufweist, und daß zur Einleitung von das Ein- und Ausfahren des Mitnehmers in die bzw. aus der Aufnahme ermöglichenden Kippbewegungen in die Wippe eine ortsfeste Steuerschiene dient.

Die erfindungsgemäße Anordnung gestattet es, mit einem Zugelement und einem vorzugsweise NC-gesteuerten Antriebsmotor unterschiedliche Bewegungen zu steuern, wenn man sie mit mehreren einem mit Mitnehmern bestückten Zugelement zugeordneten Schlitten, Wippen und Steuerschienen ausstattet. Es lassen sich also beispielsweise bei einem Werkzeugwechsler ohne großen Synchronisierungsaufwand unterschiedliche Bewegungen durchführen, wobei sich Endschalter zur Bewegungs- bzw. Positionierungserkennung erübrigen. Kollisionen können nicht auftreten, da die Reihenfolge der Bewegungen und deren zeitliche Koordination durch die Lage der vorzugsweise nokkenartigen Mitnehmer auf dem Zugelement und die Anordnung der Wippen fest vorgegeben ist. Die Geschwindigkeit des gesamten Bewegungsablaufes läßt sich auf einfache Weise zwischen ihrem minimalen und maximalen Wert variieren.

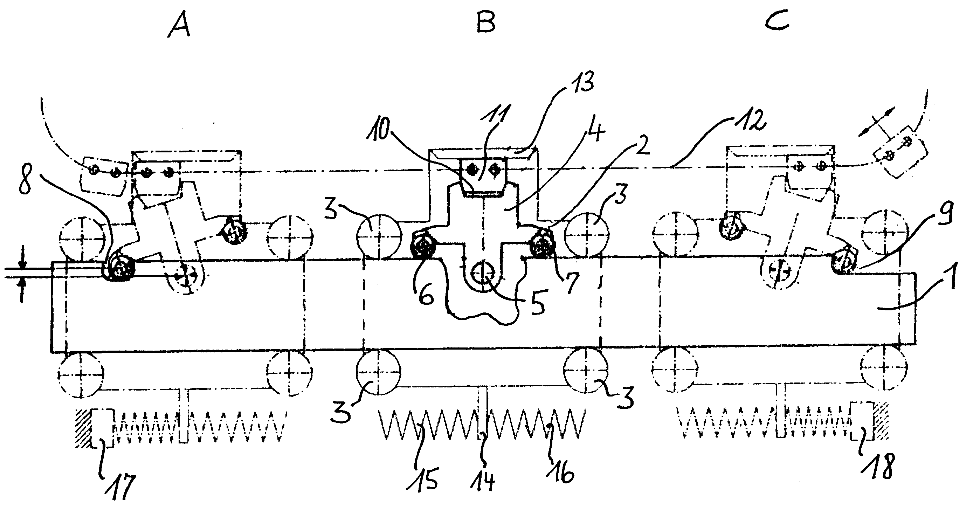

Die Erfindung wird im folgenden anhand der beigefügten einzigen Figur näher erläutert.

In der Zeichnung ist ein parallel zu einer Steuerschiene 1 geführter Schlitten 2 in drei verschiedenen Positionen A, B und C gezeigt. Der Schlitten 2 ist mit vier seitlichen Stützrollen 3 versehen, die die Steuerschiene 1 übergreifen. Eine Wippe 4 ist um eine Achse 5 schwenkbar am Schlitten 2 gelagert. Die Wippe 4 weist zwei als Rollen ausgebildete Rastelemente 6,7 auf, denen Aussparungen 8,9 in der Steuerschiene 1 zugeordnet sind. An ihrem der Achse 5 gegenüberliegenden Ende ist die Wippe 4 mit einer Aufnahme 10 für einen nockenartigen Mitnehmer 11 versehen, der fest mit einem Zugelement 12 verbunden ist, das aus einer Kette, einem Zahnriemen od.dgl. bestehen kann. Regelmäßig paarweise angeordnete Halteklammern 13 sichern die Mitnehmer 11 während des Eingriffs in die Aufnahme 10 gegen Ausweichbewegungen.

Am Schlitten 2 ist ein Ausleger 14 mit zwei als Arretierungspuffer wirkenden Federn 15,16 angeordnet. Wie aus der Zeichnung erkennbar, liegt die Feder 15 in der Position A unter Vorspannung gegen einen Anschlag 17 an, während in der Position C die Feder 16 durch den Anschlag 18 vorgespannt wird. Die Federn 15 und 16 tragen auf diese Art und Weise dafür Sorge, daß die Rastelemente 6,7 in den jeweiligen Positionen der Wippe 4 in den Aussparungen 8 bzw. 9 arretiert werden. Es versteht sich, daß der Abstand der Aussparungen 8,9 und die Länge der Steuerschiene 1 den jeweiligen Gegebenheiten entsprechend variiert werden können und daß dem Zugelement auf seiner Bahn eine Vielzahl von Steuerschienen mit entsprechenden Wippen zugeordnet werden kann, wobei sich die Bahn des Zugelementes in weiten Grenzen variieren läßt.

## Patentansprüche

1. Anordnung zum Einleiten einer Bewegung in einen längs einer Bewegungsbahn geführten Schlitten mit Hilfe eines an einem Zugelement angebrachten Mitnehmers, der mit einem schwenkbar am Schlitten gelagerten Bauteil zusammenwirkt, **dadurch gekennzeichnet**, daß das schwenkbar am Schlitten (2) gelagerte Bauteil von einer Wippe (4) gebildet wird, die eine Aufnahme (10) für den Mitnehmer (11) aufweist, und daß zur Einleitung von das Ein- und Ausfahren des Mitnehmers (11) in die bzw. aus der Aufnahme (10) ermöglichenden Kippbewegungen in die Wippe (4) eine ortsfeste Steuerschiene (1) dient.

2. Anordnung nach Anspruch 1, **dadurch gekennzeichnet**, daß die Wippe (4) mit mindestens zwei hintereinander angeordneten Rastelementen (6,7) versehen ist, denen Aussparungen (8,9) in der Steuerschiene (1) zugeordnet sind.

3. Anordnung nach Anspruch 2, **dadurch gekennzeichnet**, daß die Rastelemente (6,7) als Rollen ausgebildet sind, über die sich die Wippe (4) auf der Steuerschiene (1) abstützt.

4. Anordnung nach einem der Ansprüche 1 bis 3, **dadurch gekennzeichnet**, daß die Wippe (4) in der jeweiligen Kipposition durch jeweils eine Feder (15 bzw. 16) gehalten wird, die an einem mit dem Schlitten (2) verbundenen Ausleger (14) angeordnet ist und in der jeweiligen Rastposition gegen jeweils einen Anschlag (17 bzw. 18) anliegt.

5. Anordnung nach einem der Ansprüche 1 bis 4, **dadurch gekennzeichnet**, daß der Schlitten (2) mit Halteklammern (13) ausgestattet ist, die den Mitnehmer (11) während des Eingriffs in die Wippe (4) gegen Ausweichbewegungen sichern.

6. Anordnung nach einem der Ansprüche 1 bis 4, **dadurch gekennzeichnet**, daß das Zugelement (12) von einer Kette oder einem Zahnriemen gebildet wird.

7. Anordnung nach einem der Ansprüche 1 bis 6, **dadurch gekennzeichnet**, daß sie mehrere einem mit Mitnehmern (11) bestückten Zugelement (12) zugeordnete Schlitten (2), Wippen (4) und Steuerschienen (1) aufweist.
